# EUROPEAN PATENT SPECIFICATION

(11) **EP 4 655 642 B1**
(45) Date of publication and mention of the grant of the patent: **25.11.2026**
(21) Application number: 24703408.5
(22) Date of filing: 16.01.2024
(51) Int. Cl.: G02F 1/313

(54) **AN OPTICAL COUPLING DEVICE**
OPTISCHE KOPPLUNGSVORRICHTUNG
DISPOSITIF DE COUPLAGE OPTIQUE

(30) Priority: 24.01.2023 GB 202301018
(43) Date of publication of application: 03.12.2025
(73) Proprietor: Salience Labs Ltd, Thame, Oxfordshire OX9 3EZ (GB)
(72) Inventor: FELDMANN, Johannes, Thame Oxfordshire OX9 3EZ (GB); KEWADA, Vayshnavee, Thame Oxfordshire OX9 3EZ (GB)
(74) Representative: Scintilla Intellectual Property Ltd
(86) International application number: PCT/GB2024/050116
(87) International publication number: WO 2024/156984

(56) References cited:
- CN-A- 110 187 521
- US-A1- 2002 076 141
- US-A1- 2004 131 305
- US-A1- 2012 019 903
- A.W. POON ET AL: "Cascaded Microresonator-Based Matrix Switch for Silicon On-Chip Optical Interconnection", PROCEEDINGS OF THE IEEE IEEE. NEW YORK., US, vol. 97, no. 7, 1 July 2009 (2009-07-01), pages 1216 - 1238, XP011262463, ISSN: 0018-9219, DOI: 10.1109/JPROC.2009.2014884
- FELDMANN J. ET AL: "Parallel convolutional processing using an integrated photonic tensor core", NATURE, vol. 589, no. 7840, 6 January 2021 (2021-01-06), pages 52 - 58, XP093130977, ISSN: 0028-0836, Retrieved from the Internet <URL:http://www.nature.com/articles/s41586-020-03070-1> DOI: 10.1038/s41586-020-03070-1

## Description

### Technical Field

The present disclosure relates to an optical coupling device. In particular, the present disclosure relates to a configurable optical coupling device.

### Background

Optical matrix structures including matrix multiplications cells have been reported for enabling photonic computing, see for instance Feldmann, J., Youngblood, N., Karpov, M. et al. Parallel convolutional processing using an integrated photonic tensor core. Nature 589, 52-58 (2021). https://doi.org/10.1038/s41586-020-03070-1.

Conventional optical coupling devices such as optical switches are based on electro optic conversions. In this approach the optical input signals are converted to electrical signals, rerouted, and converted back to optical at the output. Such switch devices are generally slow and can be describe as having a high latency. Alternative approaches have been proposed based on optical fibre architectures and/or the use of Micro Electronic Mechanical Systems (MEMS) modulators. Such systems are still limited by a relatively high latency, low efficiency due to optical losses and a lack of flexibility of use. For instance these systems may not be designed to perform signal replication.

It is an object of the disclosure to address one or more of the above mentioned limitations.

### Summary

The present invetion is defined by the claims

### Description of the drawings

The disclosure is described in further detail below by way of example and with reference to the accompanying drawings, in which:
figure 1 is a schematic diagram of an optical coupling device;
figure 2 is a diagram of an exemplary implementation of the optical coupling device of figure 1;
figure 3 is a diagram of another exemplary implementation of the optical coupling device of figure 1;
figure 4 is a diagram of a modified version of the optical coupling device of figure 3;
figure 5 is a flow chart of a method for manipulating optical signals.

### Description

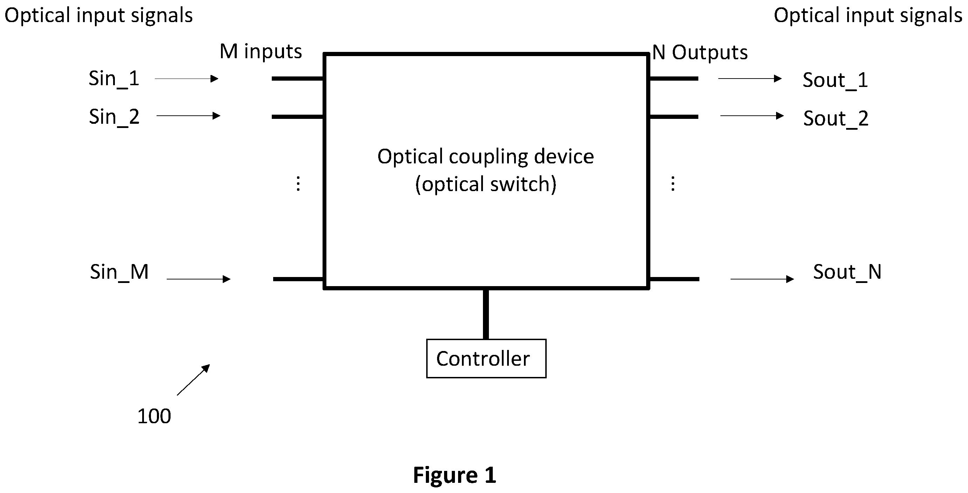

Figure 1 is a schematic diagram of an optical coupling device. The optical coupling device 100, also referred to as optical switch may be used for connecting M optical input ports to N optical output ports in a configurable way. The coupling device has M input channels, N output channels.

A plurality of coupling channels (not shown) is also provided. Each coupling channel is configured to couple an input channel to an output channel. The coupling channels are provided with dedicated amplitude adjusters configured to attenuate or amplify an optical signal. The amplitude adjusters may be optical modulators or optical amplifiers or a combination of both. A controller, such as an electronic controller or an optical controller is provided to control the operation of the amplitude adjusters.

The input ports are designed to receive optical input signals labelled Sin_1-Sin_M. The optical input signals may be generated by one or more optical sources and coupled to the input port. Depending on the type of optical source selected, optical coupling may be achieved using optical fibres, for example via grating couplers or edge coupling. Similarly, the output ports are configured to provide optical output signal Sout_1 to Sout_N. The optical coupling device 100 can be used to manipulate optical signals in various ways. For instance, the amplitude adjusters may be operated to replicate or duplicate one or more optical signals. The amplitude adjusters may also be operated to perform a computational task. For instance the controller may be configured to perform additions and/or multiplications of optical signals.

The optical input signals include information or data to be transmitted. A light source, such as a laser, may be used to generate an optical signal which is then modulated with the data to be transmitted. The device 100 is designed to route the input optical signals independently from the information or data present in them. Instead, the device / controller is preconfigured to route the signals in a predetermined fashion depending on the application. Such a device may be referred to as a layer 1 (L1) switch.

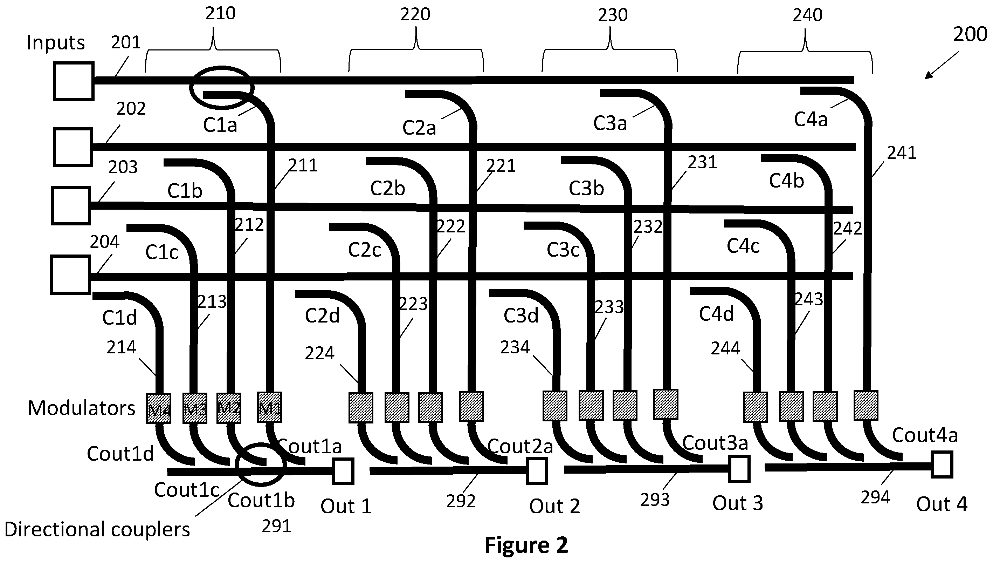

Figure 2 is a diagram of an exemplary implementation of the optical coupling device of figure 1. The optical coupling device 200 has four input ports coupled to four input channels 201-204, and four output ports coupled to four output channels 291-294.

The coupling between the input channels and output channels is provided by four sets of coupling channels labelled 210, 220, 230, 240, referred to as primary sets. In each primary set the coupling channels are configured to couple the plurality of input channels to a single output channel.

The first set 210 has four coupling channels 211, 212, 213 and 214 configured to couple the input channels 201, 202, 203 and 204 to the first output channel 291. The coupling channel 211 is provided between the first input channel 201 and the first output channel 291; the coupling channel 212 is provided between the second input channel 202 and the first output channel 291; the coupling channel 213 is provided between the third input channel 203 and the first output channel 291; the coupling channel 214 is provided between the fourth input channel 204 and the first output channel 291.

Similarly, the second set 220 has four coupling channels 221, 222, 223 and 224 configured to couple the input channels 201, 202, 203 and 204 to the second output channel 292. The third set 230 has four coupling channels 231, 232, 233 and 234 configured to couple the input channels 201, 202, 203 and 204 to the third output channel 293. The fourth set 240 has four coupling channels 241, 242, 243 and 244 configured to couple the input channels 201, 202, 203 and 204 to the fourth output channel 294.

The device 200 is also provided with four secondary sets. In a secondary set the coupling channels are configured to couple a single input channel to a plurality of output channels. The coupling channels 211, 221, 231, and 241 form a first secondary set. The channels 212, 222, 232, and 242 form a second secondary set. The channels 213, 223, 233, and 243 form a third secondary set. The channels 214, 224, 234, and 244 form a fourth secondary set.

In this way each input channel may be coupled to a plurality of outputs. For instance, the first channel 201 is coupled to the first output channel 291 via the coupling channel 211, to the second output channel 292 via the coupling channel 221, to the third output channel 293 via the coupling channel 231, and to the fourth output channel 294 via the coupling channel 241.

It will be appreciated that the above arrangement may be extended to a number M of input channels and a number N of output channels in which M, and N are integers. So more generally each input channel is provided with a number N of coupling channels for coupling to N output channels.

Each coupling channel extends between a first coupler, also referred to as input coupler, coupled to an input channel; and a second coupler, also referred to as output coupler, coupled to the corresponding output channel. For instance, the coupling channel 211 extends between the input coupler C1a at the input channel 201 and the output coupler Coutla at the output channel 291. Similarly the coupling channel 214 extends between the input coupler C1d at the input channel 204 and the output coupler Cout1d at the output channel 291.

The couplers may be implemented as directional couplers, or multimode interference splitters (MMIS) or Y-splitters. The input couplers are designed to split an incoming optical signal propagating through an input channel so that a portion of the signal, also referred to as intermediate signal, is directed to a coupling channel, while the remaining portion pursues its transmission through the input channel. Similarly, the output couplers are designed to combine an optical signal propagating through a coupling channel with another optical signal transmitted through an output channel.

The splitting ratio of the input couplers of a secondary set may be chosen such that each coupling channel provided along the input channel gets the same amount or amplitude of optical signal such that an input signal is distributed evenly between the N coupling channels of the secondary set. For the secondary set formed by 211, 221, 231 and 241, and assuming no losses, this would mean that the coupler C1a couples ¼ of the input optical signal to the channel 211, the coupler C2a couples 1/3 of the remaining optical signal to channel 221, the coupler C3a couples ½ of the remaining optical signal to channel 231 and the coupler C4a couples all (1/1) of the remaining optical signal to the channel 241. In this way each one of the coupling channels 211, 221, 231 and 241 receives a quarter of the total input optical signal received at the input port.

The splitting ratios of the output couplers of a primary set may be chosen to obtain an equal contribution from the M inputs to the output signal provided at the output port of the primary set. For the primary set 210 the splitting ratios of the output couplers Coutla, Cout1b, Coutlc and Cout1d, coupled to the first output channel 291may be ¼, 1/3, 1/2 and 1/1, respectively.

In this example the output signal received at the output port is made of ¾ of the signals from coupling channels 212, 213 and 214 and ¼ from coupling channel 211. The signal received by the output channel 291 at the output of 212 is made of 2/3 of the signals from coupling channels 213 and 214 and 1/3 from coupling channel 212. The signal received by the output channel 291 at the output of 213 is made of 1/2 of the signal from coupling channel 214 and 1/2 from coupling channel 213. The signal received by the output channel 291 at the output of 214 is 100% (1/1) of the signal from coupling channel 214.

Depending on the device implementation, further adjustments may be required to consider optical losses at the crossing points between input channels and coupling channels as well as optical losses associated with the couplers. Overall, the ratios may be adjusted so that each input contributes the same amount of optical signal to each output.

Each coupling channel comprises an optical attenuator or an optical amplifier or a combination of both. A controller (not shown) is provided to control the operation of the optical attenuators and/or optical amplifiers as dictated by the chosen design.

In the example of figure 2, each coupling channel is provided with an optical modulator for modulating an optical signal transmitted through the coupling channel. For instance, the coupling channels 211, 212, 213 and 214 are provided with modulators M1, M2, M3 and M4 respectively. In this configuration the modulators can be densely packed, hence reducing the footprint of the device.

The modulators are used to control a degree transmission of a signal passing through the coupling channel. This permits to change the configuration of the coupling device. The modulators are configured to attenuate an optical signal with an adjustable attenuation coefficient. When the attenuation coefficient is maximum the optical signal is extinguished and cannot propagate. Similarly if the attenuation coefficient is minimum (for instance zero), then the whole optical signal can propagate.

The output couplers are used to combine a modulated signal transmitted through a coupling channel with other modulated signals transmitted through other coupling channels.

**In** the example of figure 2, the input channels are linear channels arranged substantially parallel to each other's. The coupling channels have a linear portion provided between two curved portions of the input and output couplers. The linear portions of the coupling channels are substantially parallel to each other's and perpendicular to the input channels.

Depending on the design, the input channels and coupling channels may cross at several crossing points. Alternatively the input channels and coupling channels may be provided in different planes so that they do not cross.

The optical coupling device 200 may be used as an optical switch for connecting M optical input ports to N optical output ports in a reconfigurable way with ultra-low latency. The device 200 also enables replication of input signals from one to many connections. The selection of which input is connected to which output can be freely reconfigured at high speed (for instance at GHz frequency) by controlling the attenuators and/ or amplifiers. The device avoids electro-optic conversion of the input signals and therefore enables ultra-low latency (only time of flight of the optical signal, for instance less than 1ns). An additional advantage is the capability to replicate signals. Stated another way, an input optical signal on one input port can be sent to multiple output ports. This can be achieved while compensating for optical losses so that the intensity of the replicated output optical signals is sufficient for detection or further processing.

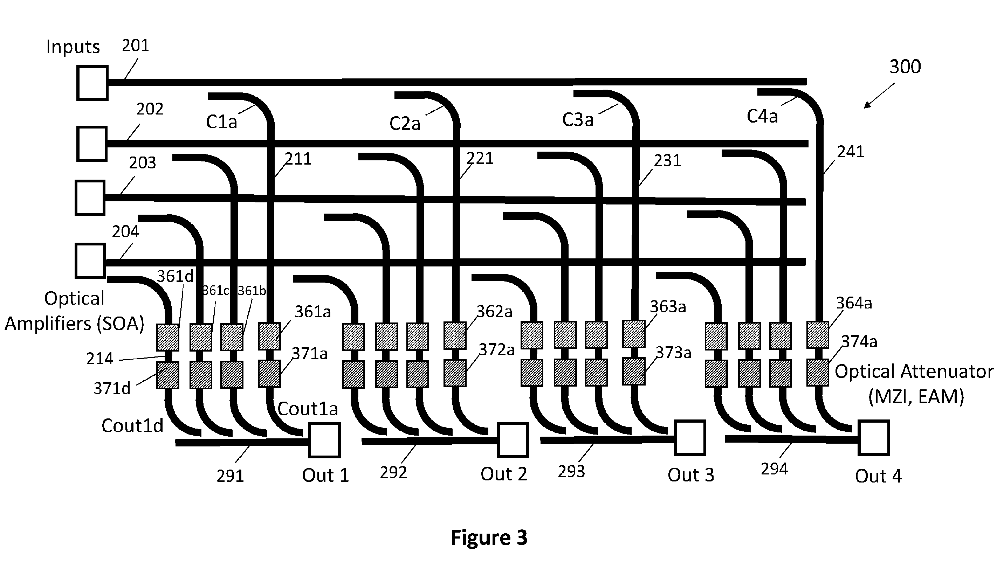

Figure 3 is a diagram of another exemplary implementation of the optical coupling device of figure 1. The device 300 has the same architecture as the device 200 of figure 2, and same reference numerals are used to label corresponding components. In this implementation each coupling channel is provided with both an optical amplifier and an optical attenuator. For example the coupling channel 211 is provided with optical amplifier 361a and optical attenuator 371a. Similarly coupling channel 214 is provided with optical amplifier 361d and optical attenuator 371d.

The optical amplifiers may be implemented as a semiconductor optical amplifiers SOAs. The optical attenuators may be Mach Zehnder modulators (MZMs) also referred to as Mach Zehnder interferometers (MZIs), or electro-absorption modulators (EAMs), or micro-ring resonators, or a phase-change material (PCM) modulators.

An attenuator can be used to cancel or extinct an optical signal that should not be transferred to an output port. In this scenario the amplifier is turned off and the attenuator is turned on. The amplifier/attenuator combination may be implemented using a same component or as two separate components. An adjuster component, such as for instance an SOA, may be designed to perform signal amplification when a positive voltage is applied to it, and to perform signal attenuation when a negative voltage is applied to it.

In operation, an optical input signal propagates through an input channel, for instance input channel 201, and the input couplers C1a-C4a direct a portion of the optical input signal to the coupling channels 211,221,231 and 241, respectively. When an optical amplifier located on one of these coupling channels is turned on, the optical signal propagating through the channel is amplified. This can be used to recover optical losses in the optical circuit. By turning on multiple optical amplifiers connected to a same input port, multiple output ports can be addressed to perform signal replication.

As explained above with reference to figure 2, the splitting ratios of the input couplers C1a, C2a, C3a and C4a may be selected such that each coupling channel receives ¼ of the input optical signal. If the optical amplifiers 361a, 362a, 363a and 364a are all turned on, then each one of the coupling channels 211, 221, 231 and 241 may provide a same amplified optical signal at the output channels 291, 292, 293 and 294. Assuming that optical losses are the same in each coupling channel, this may be achieved using a same amplification coefficient for each one of the amplifiers 361a-364a. Alternatively different amplification coefficient may be used to compensate for different optical losses.

The optical attenuators may be used to prevent an optical signal propagating through a coupling channel from being transmitted to an output channel. For instance, the optical attenuators 371a, 372a, 373a and 374a may be turned off, while all the other remaining attenuators are turned on to prevent propagation of input signals arising from input channels 202, 203 and 204 to contribute to the output signal at the output ports 1-4. In this example the input optical signal received at the input channel 201 would be replicated four times at the output ports 1 to 4.

Replicated output signals have the same profile as the input signal but may have a different amplitude. As explained above, the provision of amplifiers permits to compensate for optical losses or even to amplify the signal above the level of the input signal. The level of amplification may be chosen based on the sensitivity of an optical detector for sensing the output signals.

It will also be appreciated that the circuit of figure 3 could be implemented with only the optical attenuators and no optical amplifier, although in this case the input signal amplitude would be reduced by > 1/ (N*M).

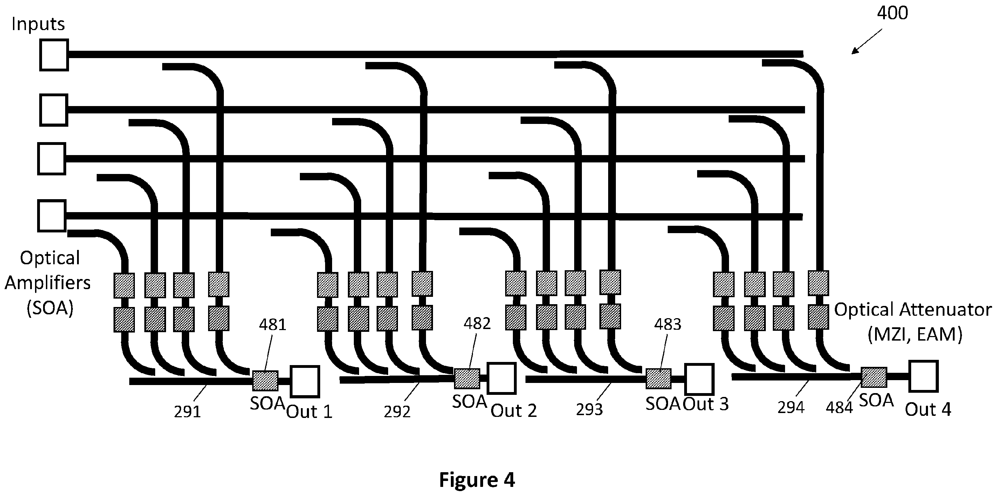

Figure 4 is a diagram of a modified version of the optical coupling device of figure 3. In this example the output channels 291, 292, 293 and 294 are provided with additional optical amplifiers 481, 482, 483, and 484, respectively. This implementation provides further flexibility for amplifying the output signal provided at each one of the output channels.

The optical coupling device as describe with reference to figures 1 to 4 may be implemented using an integrated optical circuit such as a photonic integrated circuit (PIC).

The input channels, coupling channels and output channels may be implemented in a single layer. In this case the input channels and coupling channels may cross at several crossing points. This may lead to some loss of signal and optical crosstalk. For instance, the optical signal might be scattered at the crossing into the other (perpendicular) channel. Alternatively, the input channels may be formed within a first layer, while the coupling channels and output channels are formed within a second layer. The first layer may be provided in a first plane and the second layer may be provided in a second plane substantially parallel to the first plane. For instance the second layer may be provided either above or below the first layer. In this way the channel crossing can be avoided, hence reducing optical losses.

The various channels may be implemented as waveguides such as integrated waveguides. The waveguides may be made of the same or different materials. In a specific example the input waveguides could be implemented in a silicon nitride layer and the coupling waveguides in a silicon layer. The silicon layer may be provided underneath the silicon nitride layer. This approach permits to build a compact device with a fast signal transmission time of the optical signals between input and output ports. For instance, a compact photonic integrated circuit of less than 2x2cm² may be achieved, hence reducing time of flight to achieve ultra-low latency and recovers signal loss via optical amplifiers.

As no electro-optic conversion of the signals is involved, the latency is defined by the time it takes for the optical signal to travel through the circuit (and the attached optical fibres, if any). By only using broadband components (for instance directional couplers and broadband SOAs), no additional tuning is needed to compensate for wavelength variations. The optical coupling device can be designed to operate with different wavelengths depending on the application. For instance, the optical coupling device may be designed to operate across the main telecommunication windows around 1200-1600 nm wavelengths. Knowledge of the input wavelengths of the optical input signals is not needed (besides the general optical region of the spectrum).

The modulators may be electro optic modulators, for example, EOMs based on Indium Phosphide InP, silicon germanium or lithium niobate. Other types of integrated modulators could also be envisaged including polymer based modulators and optically controlled modulators such as phase change material modulators PCMs to name a few.

The optical coupling device of the disclosure may be used for different applications. As explained above the optical coupling device may be used to replicate an input optical signal multiple times and distribute the replicated signals at a plurality of outputs.

The optical coupling device may also be used as a computing device for performing computational tasks, for instance as a multiplication matrix. The modulation of an optical signal can be used to perform a multiplication operation of the optical signal by a predetermined coefficient. In turn the accumulation of modulated signals can be used to perform multiply-accumulate (MAC) operation. Accumulation is carried out by superimposing signals over time. For instance, the amplitude adjusters may be operated to accumulate several optical signals. The size of the matrix can be increased by linking multiple optical coupling devices together.

For example, a first input signal having an amplitude a may be provided at the input channel 201, and a second input signal having an amplitude b may be provided at the input channel 202. By setting the modulators M1 and M2 of figure 2 to attenuation values corresponding to factors c and d, a multiplication between the input signal and the amplitude adjustment coefficient is performed: (a*c) for the intermediate signal propagating through coupling channel 211 and (b*d) for the intermediate signal propagating through coupling channel 212. By combining the intermediate signals in the output channel 291 with equal ratios, the output amplitude represents the operation a*c + b*d (the MAC operation). It will be appreciated that the devices of figure 3 and 4 may also be used for performing such operations, for instance using amplification coefficients or attenuations coefficients.

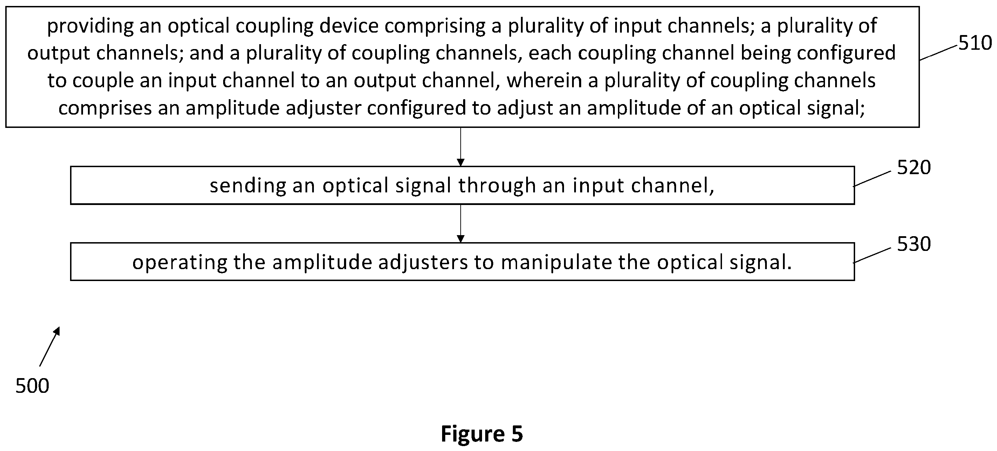

Figure 5 is a flow chart of a method for manipulating an optical signal. At step 510 an optical coupling device is provided. The optical coupling device comprises a plurality of input channels; a plurality of output channels; and a plurality of coupling channels, each coupling channel being configured to couple an input channel to an output channel. A plurality of coupling channels comprises an amplitude adjuster configured to adjust an amplitude of an optical signal. At step 520 an optical signal is sent through an input channel. At step 530 the amplitude adjusters are operated to manipulate the optical signal.

For instance, the amplitude adjusters may be operated to replicate the optical signal. This may be achieved by splitting the optical signal into a plurality of intermediate signals using the coupling channels to obtain a plurality of replicated signals at the output channels. The intermediate signals may be amplified using the amplitude adjusters.

A skilled person will appreciate that variations of the disclosed arrangements are possible without departing from the disclosure. Accordingly, the above description of the specific embodiments is made by way of example only and not for the purposes of limitation. It will be clear to the skilled person that minor modifications may be made without significant changes to the operation described.

## Claims

1. An optical coupling device comprising
a plurality of input channels;
a plurality of output channels; and
a plurality of coupling channels, each coupling channel being configured to couple an input channel to an output channel, wherein a plurality of coupling channels comprises an amplitude adjuster configured to adjust an amplitude of an optical signal;
wherein the plurality of coupling channels forms at least one primary set of coupling channels configured to couple the plurality of input channels to a single output channel, and at least one secondary set of coupling channels configured to couple a single input channel to a plurality of output channels;
wherein each coupling channel extends between a first coupler coupled to an input channel and a second coupler coupled to an output channel;
wherein the first coupler is designed to split an optical signal propagating through the input channel with a first ratio so that a portion of the signal is directed to the coupling channel, while the remaining portion is transmitted through the input channel;
wherein the first ratios of the first couplers in the secondary set are selected to distribute an optical signal received at the input channel evenly between the coupling channels of the secondary set;
wherein the second coupler is designed to combine an optical signal propagating through the coupling channel with another signal propagating through the output channel with a second ratio;
wherein the second ratios of the second couplers in the primary set are selected to obtain an equal contribution from each input channel to an output signal received at an output port of the single output channel associated with the primary set.

2. The optical coupling device as claimed in claim 1, wherein the first coupler is a directional coupler, or a multimode interference splitter or a Y-splitter; and wherein the second coupler is a directional coupler, or a multimode interference splitter or a Y-splitter.

3. The optical coupling device as claimed in claim 1 or 2, wherein the amplitude adjuster comprises at least one of an optical attenuator and an optical amplifier.

4. The optical coupling device as claimed in any of the preceding claims, wherein one or more output channels comprise an optical amplifier.

5. The optical coupling device as claimed in any of the preceding claims comprising a controller configured to control the operation of a plurality of optical attenuators or optical amplifiers or a combination of both optical amplifiers and optical attenuators.

6. The optical coupling device as claimed in claim 5, wherein the controller is configured to control a plurality of amplitude adjusters to perform optical signal replication or optical computation.

7. The optical coupling device as claimed in claim 6, wherein the controller is configured to turn on optical amplifiers of the secondary set so that an input optical signal received at the input channel of the secondary set results in a plurality of duplicated optical signals provided at the output channels.

8. The optical coupling device as claimed in any of the preceding claims, wherein each input channel extends along a corresponding longitudinal axis, and wherein the input channels are arranged substantially parallel to each other.

9. The optical coupling device as claimed in claim 8, wherein the coupling channels have a linear portion, wherein the linear portions of the coupling channels are arranged substantially parallel to each other.

10. The optical coupling device as claimed in claim 9, wherein the linear portions of the coupling channels are substantially perpendicular to the input channels.

11. The optical coupling device as claimed in any of the preceding claims wherein the input channels are formed within a first layer provided in a first plane and wherein the coupling channels are formed within a second layer provided in a second plane.

12. An integrated optical chip comprising an optical coupling device as claimed in any of the preceding claims.

13. A method of manipulating an optical signal, the method comprising providing an optical coupling device as claimed in claim 1, sending the optical signal through an input channel; and operating the amplitude adjusters to manipulate the optical signal.

14. The method as claimed in claim 13, comprising
splitting the optical signal into a plurality of intermediate signals using the coupling channels; and
amplifying the intermediate signals using the amplitude adjusters to obtain a plurality of replicated signals at the output channels.

15. The method as claimed in claim 13, comprising combining several input signals to perform a computational operation.

## Patentansprüche

1. Optische Kopplungsvorrichtung, umfassend
eine Vielzahl von Eingangskanälen;
eine Vielzahl von Ausgangskanälen; und
eine Vielzahl von Kopplungskanälen, wobei jeder Kopplungskanal dazu konfiguriert ist, einen Eingangskanal an einen Ausgangskanal zu koppeln, wobei eine Vielzahl von Kopplungskanälen einen Amplitudeneinsteller umfasst, der dazu konfiguriert ist, eine Amplitude eines optischen Signals einzustellen;
wobei die Vielzahl von Kopplungskanälen zumindest einen primären Satz von Kopplungskanälen, der dazu konfiguriert ist, die Vielzahl von Eingangskanälen an einen einzelnen Ausgangskanal zu koppeln, und zumindest einen sekundären Satz von Kopplungskanälen, der dazu konfiguriert ist, einen einzelnen Eingangskanal an eine Vielzahl von Ausgangskanälen zu koppeln, bildet;
wobei sich jeder Kopplungskanal zwischen einem ersten Koppler, der an einen Eingangskanal gekoppelt ist, und einem zweiten Koppler, der an einen Ausgangskanal gekoppelt ist, erstreckt;
wobei der erste Koppler dazu gestaltet ist, ein optisches Signal, das sich durch den Eingangskanal ausbreitet, mit einem ersten Verhältnis zu teilen, sodass ein Abschnitt des Signals an den Kopplungskanal gerichtet ist, während der übrige Abschnitt durch den Eingangskanal übertragen wird;
wobei die ersten Verhältnisse der ersten Koppler in dem sekundären Satz ausgewählt sind, um ein optisches Signal, das an dem Eingangskanal empfangen wird, gleichmäßig zwischen den Kopplungskanälen des sekundären Satzes zu verteilen;
wobei der zweite Koppler dazu gestaltet ist, ein optisches Signal, das sich durch den Kopplungskanal ausbreitet, mit einem anderen Signal, das sich durch den Ausgangskanal ausbreitet, mit einem zweiten Verhältnis zu kombinieren;
wobei die zweiten Verhältnisse der zweiten Koppler in dem primären Satz dazu ausgewählt sind, einen gleichen Beitrag von jedem Eingangskanal zu einem Ausgangssignal zu erhalten, das an einem Ausgangsport des einzelnen Ausgangskanals assoziiert mit dem primären Satz empfangen wird.

2. Optische Kopplungsvorrichtung nach Anspruch 1, wobei der erste Koppler ein Richtkoppler oder ein Multimode-Interferenzteiler oder ein Y-Teiler ist; und wobei der zweite Koppler ein Richtkoppler oder ein Multimode-Interferenzteiler oder ein Y-Teiler ist.

3. Optische Kopplungsvorrichtung nach Anspruch 1 oder 2, wobei der Amplitudeneinsteller zumindest eines von einem optischen Dämpfer und einem optischen Amplifizierer umfasst.

4. Optische Kopplungsvorrichtung nach einem der vorhergehenden Ansprüche, wobei ein oder mehrere Ausgangskanäle einen optischen Amplifizierer umfassen.

5. Optische Kopplungsvorrichtung nach einem der vorhergehenden Ansprüche, umfassend eine Steuerung, die dazu konfiguriert ist, den Betrieb einer Vielzahl von optischen Dämpfern oder optischen Amplifizierern oder einer Kombination von sowohl optischen Amplifizierern als auch optischen Dämpfern zu steuern.

6. Optische Kopplungsvorrichtung nach Anspruch 5, wobei die Steuerung dazu konfiguriert ist, eine Vielzahl von Amplitudeneinstellern zu steuern, um optische Signalreplikation oder optische Berechnung durchzuführen.

7. Optische Kopplungsvorrichtung nach Anspruch 6, wobei die Steuerung dazu konfiguriert ist, optische Amplifizierer des sekundären Satzes einzuschalten, sodass ein optisches Eingangssignal, das an dem Eingangskanal des sekundären Satzes empfangen wird, in einer Vielzahl von duplizierten optischen Signalen resultiert, die an den Ausgangskanälen bereitgestellt sind.

8. Optische Kopplungsvorrichtung nach einem der vorhergehenden Ansprüche, wobei sich jeder Eingangskanal entlang einer entsprechenden Längsachse erstreckt und wobei die Eingangskanäle im Wesentlichen parallel zueinander angeordnet sind.

9. Optische Kopplungsvorrichtung nach Anspruch 8, wobei die Kopplungskanäle einen linearen Abschnitt aufweisen, wobei die linearen Abschnitte der Kopplungskanäle im Wesentlichen parallel zueinander angeordnet sind.

10. Optische Kopplungsvorrichtung nach Anspruch 9, wobei die linearen Abschnitte der Kopplungskanäle im Wesentlichen senkrecht zu den Eingangskanälen sind.

11. Optische Kopplungsvorrichtung nach einem der vorhergehenden Ansprüche, wobei die Eingangskanäle innerhalb einer ersten Schicht gebildet sind, die in einer ersten Ebene bereitgestellt ist, und wobei die Kopplungskanäle innerhalb einer zweiten Schicht gebildet sind, die in einer zweiten Ebene bereitgestellt ist.

12. Integrierter optischer Chip, umfassend eine optische Kopplungsvorrichtung nach einem der vorhergehenden Ansprüche.

13. Verfahren zum Manipulieren eines optischen Signals, wobei das Verfahren Folgendes umfasst
Bereitstellen einer optischen Kopplungsvorrichtung nach Anspruch 1,
Senden des optischen Signals durch einen Eingangskanal; und
Betreiben der Amplitudeneinsteller, um das optische Signal zu manipulieren.

14. Verfahren nach Anspruch 13, umfassend
Teilen des optischen Signals in eine Vielzahl von Zwischensignalen unter Verwendung der Kopplungskanäle; und
Amplifizieren der Zwischensignale unter Verwendung der Amplitudeneinsteller, um eine Vielzahl von replizierten Signalen an den Ausgangskanälen zu erhalten.

15. Verfahren nach Anspruch 13, umfassend Kombinieren von mehreren Eingangssignalen, um einen Rechenvorgang durchzuführen.

## Revendications

1. Dispositif de couplage optique comprenant
une pluralité de canaux d'entrée ;
une pluralité de canaux de sortie ; et
une pluralité de canaux de couplage, chaque canal de couplage étant configuré pour coupler un canal d'entrée à un canal de sortie, dans lequel une pluralité de canaux de couplage comprennent un dispositif de réglage d'amplitude configuré pour régler une amplitude d'un signal optique ;
dans lequel la pluralité de canaux de couplage forment au moins un ensemble primaire de canaux de couplage configuré pour coupler la pluralité de canaux d'entrée à un canal de sortie unique, et au moins un ensemble secondaire de canaux de couplage configuré pour coupler un canal d'entrée unique à une pluralité de canaux de sortie ;
dans lequel chaque canal de couplage s'étend entre un premier coupleur couplé à un canal d'entrée et un second coupleur couplé à un canal de sortie ;
dans lequel le premier coupleur est conçu pour diviser un signal optique se propageant à travers le canal d'entrée selon un premier rapport de sorte qu'une partie du signal soit dirigée vers le canal de couplage, tandis que la partie restante soit transmise via le canal d'entrée ;
dans lequel les premiers rapports des premiers coupleurs de l'ensemble secondaire sont sélectionnés pour distribuer un signal optique reçu au niveau du canal d'entrée de manière uniforme entre les canaux de couplage de l'ensemble secondaire ;
dans lequel le second coupleur est conçu pour combiner un signal optique se propageant à travers le canal de couplage avec un autre signal se propageant à travers le canal de sortie selon un second rapport ;
dans lequel les seconds rapports des seconds coupleurs dans l'ensemble primaire sont sélectionnés pour obtenir une contribution égale de chaque canal d'entrée à un signal de sortie reçu au niveau d'un port de sortie du canal de sortie unique associé à l'ensemble primaire.

2. Dispositif de couplage optique selon la revendication 1, dans lequel le premier coupleur est un coupleur directionnel, ou un diviseur d'interférence multimode ou un diviseur Y ; et dans lequel le second coupleur est un coupleur directionnel, ou un diviseur d'interférence multimode ou un diviseur Y.

3. Dispositif de couplage optique selon la revendication 1 ou 2, dans lequel le dispositif de réglage d'amplitude comprend au moins l'un d'un atténuateur optique et d'un amplificateur optique.

4. Dispositif de couplage optique selon l'une quelconque des revendications précédentes, dans lequel un ou plusieurs canaux de sortie comprennent un amplificateur optique.

5. Dispositif de couplage optique selon l'une quelconque des revendications précédentes, comprenant un contrôleur configuré pour commander le fonctionnement d'une pluralité d'atténuateurs optiques ou d'amplificateurs optiques ou d'une combinaison d'amplificateurs optiques et d'atténuateurs optiques.

6. Dispositif de couplage optique selon la revendication 5, dans lequel le contrôleur est configuré pour commander à une pluralité de dispositifs de réglage d'amplitude d'effectuer une réplication de signal optique ou un calcul optique.

7. Dispositif de couplage optique selon la revendication 6, dans lequel le contrôleur est configuré pour activer des amplificateurs optiques de l'ensemble secondaire de sorte qu'un signal optique d'entrée reçu au niveau du canal d'entrée de l'ensemble secondaire donne lieu à une pluralité de signaux optiques dupliqués fournis au niveau des canaux de sortie.

8. Dispositif de couplage optique selon l'une quelconque des revendications précédentes, dans lequel chaque canal d'entrée s'étend le long d'un axe longitudinal correspondant, et dans lequel les canaux d'entrée sont agencés sensiblement parallèlement les uns aux autres.

9. Dispositif de couplage optique selon la revendication 8, dans lequel les canaux de couplage ont une partie linéaire, dans lequel les parties linéaires des canaux de couplage sont agencées de manière sensiblement parallèle les unes aux autres.

10. Dispositif de couplage optique selon la revendication 9, dans lequel les parties linéaires des canaux de couplage sont sensiblement perpendiculaires aux canaux d'entrée.

11. Dispositif de couplage optique selon l'une quelconque des revendications précédentes, dans lequel les canaux d'entrée sont formés dans une première couche prévue dans un premier plan et dans lequel les canaux de couplage sont formés dans une seconde couche prévue dans un second plan.

12. Puce optique intégrée comprenant un dispositif de couplage optique selon l'une quelconque des revendications précédentes.

13. Procédé de manipulation d'un signal optique, le procédé comprenant la fourniture d'un dispositif de couplage optique selon la revendication 1,
l'envoi du signal optique à travers un canal d'entrée ; et
le fonctionnement des dispositifs de réglage d'amplitude pour manipuler le signal optique.

14. Procédé selon la revendication 13, comprenant
la séparation du signal optique en une pluralité de signaux intermédiaires en utilisant les canaux de couplage ; et
l'amplification des signaux intermédiaires en utilisant les dispositifs de réglage d'amplitude pour obtenir une pluralité de signaux répliqués au niveau des canaux de sortie.

15. Procédé selon la revendication 13, comprenant la combinaison de plusieurs signaux d'entrée pour effectuer une opération de calcul.
